# DEMANDE DE BREVET EUROPEEN

(11) **EP 1 906 079 A1**
(43) Date de publication de la demande: **02.04.2008**
(21) Numéro de dépôt: 07301402.9
(22) Date de dépôt: 26.09.2007
(51) Int. Cl.: F21S 8/00, H05B 35/00

(54) **Nouvelle structure d'applique lumineuse**

(30) Priorité: 26.09.2006 FR 0608426
(71) Demandeur: Albert, Pascal, 44850 Saint-Mars-Du-Desert (FR)
(72) Inventeur: Albert, Pascal, 44850 Saint-Mars-Du-Desert (FR)
(74) Mandataire: Michelet, Alain

(57) **Abrégé**

La présente invention concerne une nouvelle structure d'applique lumineuse de faible épaisseur, destinée à être apposée sur une surface à décorer, par exemple un mur ou la carrosserie d'un véhicule.

L'applique lumineuse (1) selon l'invention comprend au moins une feuille plane souple luminescente (2) sur la ou l'une des surfaces émettrices de lumière de laquelle est solidarisée une résine synthétique (3) souple, transparente ou translucide, formant une couche superficielle de diffusion de la lumière, dont la bordure périphérique (8b) a une section s'estompant en forme générale d'arc de cercle.

De manière avantageuse, un film imprimé (11) et/ou un support d'accrochage (12) est intercalé entre la feuille luminescente (2) et la couche de résine (3).

## Description

La présente invention concerne une nouvelle structure d'applique lumineuse de faible épaisseur, destinée à être apposée sur une surface à décorer, à savoir par exemple un mur, la carrosserie ou le tableau de bord d'un véhicule, un siège, un vêtement, etc.

Une approche particulièrement esthétique et visuelle pour orner une surface consiste à l'équiper avec une ou plusieurs lampes, dénommées encore communément « appliques lumineuses ».

Certaines de ces appliques lumineuses ont l'avantage d'être pratiquement plates.
Pour cela, elles comportent des moyens d'émission de lumière constitués de feuille(s) luminescente(s), généralement de type feuilles électroluminescentes, protégé(s) par une plaque transparente rapportée, en matière plastique rigide ou semi-rigide (par exemple de type plaque Plexiglas (Marque déposée)).
De telles appliques lumineuses ont l'intérêt d'émettre de la lumière, sans rayonnement thermique ; elles ont encore notamment l'avantage d'être de faible épaisseur, et d'avoir une durée de vie relativement longue.
Cependant, la lumière émise par ces appliques plates a l'inconvénient d'être quasiment « unidirectionnelle », avec une orientation principalement perpendiculairement à la feuille luminescente. De plus, ces appliques ne peuvent être rapportées que sur des surfaces planes ou relativement planes, du fait de leur rigidité et de leur planéité.

Le demandeur a développé une nouvelle applique lumineuse de faible épaisseur, dont la structure particulière produit, en fonctionnement, un effet lumineux original en « relief » et une émission de lumière « multidirectionnelle » ; cette applique originale a également l'intérêt majeur de pouvoir être rapportée et d'épouser une grande variété de surfaces de réception, qu'elles soient planes ou qu'elles présentent une forme tridimensionnelle.

Pour cela, l'applique lumineuse conforme à l'invention comprend au moins une feuille plane souple luminescente sur la ou l'une des surfaces émettrices de lumière de laquelle est solidarisée une résine synthétique souple transparente ou translucide, formant une couche superficielle de diffusion de la lumière, dont la bordure périphérique a une section s'estompant en forme générale d'arc de cercle.
En fonctionnement, la lumière émise par la feuille luminescente se diffuse au travers de la couche de résine, ce qui provoque un phénomène particulièrement esthétique de « relief lumineux » (notamment dû à l'effet de réverbération ou de diffraction au sein de la résine). De plus, l'éclairage interne de la bordure périphérique en arc de cercle de la couche de résine contribue encore à l'originalité de l'effet visuel obtenu, en faisant ressortir les contours de l'applique. De même, la faible épaisseur de l'applique, et sa bordure en arc de cercle, lui permettent d'épouser au mieux sa surface de réception.

Des caractéristiques structurelles, additionnelles et avantageuses de l'invention, pouvant être prises indépendamment les unes des autres ou en combinaison, sont listées ci-dessous, à savoir :
- la feuille émettrice de lumière est de type feuille électroluminescente, et comporte des moyens pour son raccordement à un circuit d'alimentation électrique ; de manière intéressante, ces moyens de raccordement électrique s'étendent du côté de la surface de la feuille électroluminescente qui est opposée à celle recouverte par la résine synthétique, en particulier pour masquer les composantes de ce raccordement électrique dans ou derrière le support de réception ; encore de manière avantageuse, le circuit d'alimentation électrique comporte des moyens de commande destinés à permettre la mise en oeuvre de cycles d'éclairage.
- l'applique lumineuse comporte une impression, avantageusement sous forme d'un film imprimé rapporté - entre la feuille luminescente et la couche superficielle de résine et/ou - au sein de ladite feuille luminescente ; ce film imprimé peut comporter un motif esthétique ou informatif, par exemple publicitaire.
- l'applique lumineuse comporte au moins une couche d'un matériau formant support d'accrochage, ledit support d'accrochage délimitant le pourtour de la couche de résine lorsqu'elle est rapportée par coulage, et ledit support d'accrochage recevant éventuellement une impression ; le support d'accrochage peut avoir une surface différente de celle de la feuille luminescente associée, et avantageusement une surface supérieure à celle de ladite feuille luminescente, de sorte que son pourtour se situe à l'extérieur par rapport à la bordure de ladite feuille luminescente, le contour de la couche de résine s'étendant alors aussi au-delà de la surface de ladite feuille luminescente.
- la couche superficielle de résine a une épaisseur comprise entre 1 et 10 mm.
- la surface de l'applique, opposée à la couche de résine, est recouverte de moyens permettant sa fixation sur la surface à décorer, par exemple de type revêtement adhésif.
- la feuille luminescente comporte au moins une découpe ou un ajourage, pour permettre le passage d'au moins une ampoule de type diode électroluminescente et éventuellement son implantation au sein de la couche superficielle de résine associée.

La présente invention concerne encore le procédé pour la fabrication d'une applique lumineuse telle que définie ci-dessus, ce procédé comprenant la succession d'étapes suivantes :
- la découpe de la feuille luminescente, selon le contour lumineux recherché,
- éventuellement la pose d'un film imprimé et/ou d'une couche formant support d'accrochage sur la ou l'une des surfaces émettrices de lumière de ladite feuille luminescente,
- le recouvrement de ladite surface émettrice de lumière de ladite feuille luminescente par coulage de la couche superficielle de résine, cette dernière étant appliquée en quantité appropriée et de manière adaptée de sorte que, une fois rigidifiée, elle présente un relief dont la bordure périphérique présente une section s'estompant en forme générale d'arc de cercle.

L'invention sera encore illustrée, sans être aucunement limitée, par la description suivante de plusieurs formes de réalisations possibles de l'invention, données uniquement à titre d'exemples et représentées sur les dessins annexés dans lesquels :
- la figure 1 est une représentation schématique, vue de côté, d'une applique lumineuse conforme à l'invention ;
- la figure 2 est encore une vue schématique de l'applique lumineuse de la figure 1, avec ses différentes couches éclatées les unes par rapport aux autres pour faciliter la compréhension ;
- la figure 3 est une vue éclatée, schématique et de côté, d'une autre forme de réalisation possible d'une applique lumineuse conforme à l'invention ;
- la figure 4 représente, schématiquement et vue de côté, encore une autre forme possible de réalisation d'une applique lumineuse conforme à l'invention, dans laquelle une LED complémentaire est rapportée au travers de sa feuille luminescente.

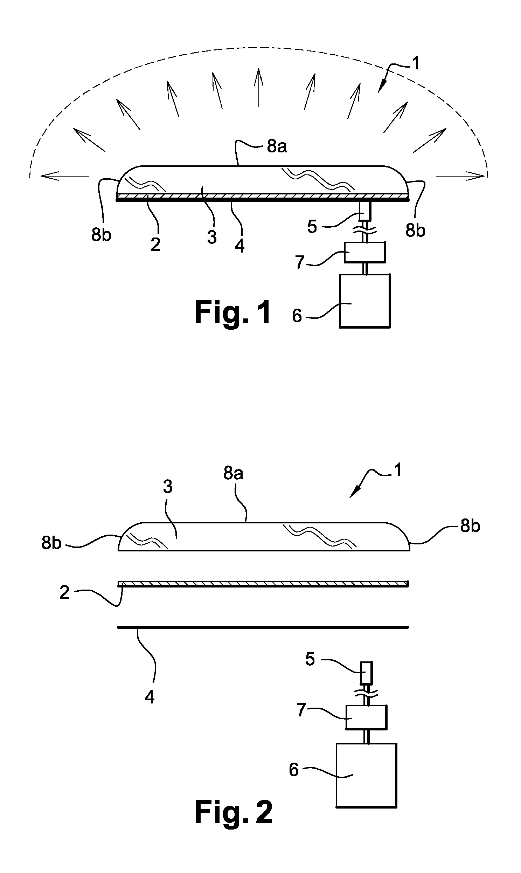

Selon la première forme de réalisation des figures 1 et 2, l'applique lumineuse 1 comprend une superposition d'éléments plans et chacun de faible épaisseur, dont leurs faces en regard sont solidarisées l'une avec l'autre pour former un ensemble souple de type « monobloc ».
En l'occurrence, cette applique 1 comprend une source lumineuse en forme de feuille luminescente 2 - sur l'une des faces de laquelle est fixée une couche superficielle 3 réalisée en résine synthétique, transparente ou translucide, assurant principalement des fonctions de « diffraction » de la lumière émise par ladite feuille luminescente 1 et de protection de cette feuille 1, et - sur l'autre face de laquelle est fixée une couche adhésive sous-jacente 4, optionnelle, pour la fixation de l'applique lumineuse 1 sur la surface à décorer.

La feuille luminescente 2 consiste en l'occurrence en une feuille électroluminescente souple, comportant des moyens 5 pour son raccordement à un circuit d'alimentation électrique 6.

Cette feuille électroluminescente 2 est en elle-même de structure classique, et bien connue de l'homme de l'art. Elle comprend par exemple deux films formant électrodes, entre lesquels sont interposés une pellicule d'encre électroluminescente au phosphore et un film diélectrique (non visibles sur les figures 1 et 2).
Cette feuille 2 est éventuellement étanche intrinsèquement ; de manière alternative, elle est encapsulée hermétiquement dans un film ou une matière plastique étanche, pour optimiser son isolation électrique.
La feuille électroluminescente 2 a ici un contour correspondant à la forme générale d'applique lumineuse recherchée.
Encore de manière intéressante, cette feuille électroluminescente 2 peut recevoir une impression à base d'encre (un dessin par exemple) sur sa surface émettrice de lumière ; l'impression peut également être appliquée au sein de cette feuille luminescente 2.

Les moyens de raccordement 5 s'étendent à l'équerre par rapport à la feuille électroluminescente 2, cela à partir d'une empreinte de contact (non représentée) ménagée sur sa surface opposée à celle recouverte de la couche de résine 3 (de préférence à l'intérieur du pourtour périphérique délimité par les contours de la feuille 2). Cette disposition particulière du raccordement 5, à l'arrière de l'applique 1, permet de cacher l'ensemble du circuit électrique derrière la surface à décorer ou au sein même de celle-ci.
On note que ces moyens de raccordement électrique peuvent être remplacés par toute autre forme adaptée, à savoir par exemple des moyens de raccordement classiques s'étendant dans le prolongement de la feuille électroluminescente 2 associée.

Des moyens programmables 7 sont avantageusement associés au circuit d'alimentation électrique 6, pour permettre le réglage de l'émission de lumière par la feuille électroluminescente 2 selon des cycles choisis par l'utilisateur (par exemple des cycles d'émission de lumière en discontinu, d'intensités variables, etc.).
Ces moyens programmables 7 sont par exemple de type programmateur d'alimentation.

La couche superficielle de résine 3 a une épaisseur comprise entre 1 et 10 millimètres, et présente un relief composé d'une partie centrale 8a d'épaisseur constante ou sensiblement constante, délimitée par une bordure périphérique 8b présentant une section s'estompant en forme générale d'arc de cercle ; elle est réalisée par exemple dans une matière polymérique bi-composants, à savoir un mélange homogène d'une résine de polyuréthane et d'un catalyseur.
En pratique, on observe encore que la courbure de la bordure périphérique 8b peut être plus ou moins prononcée tout au long de sa longueur, notamment en fonction de la forme du contour de la couche de résine 3.

Le relief de la couche superficielle 3 présente l'avantage d'optimiser l'effet de « diffraction » de la lumière émise par la feuille électroluminescente 2 ; de plus, sa bordure périphérique 8b en arc de cercle lui confère une sorte d'effet « lentille » et évite la présence d'arêtes saillantes.
Pour obtenir cette conformation particulière, la couche superficielle de résine 3 peut être appliquée directement sur la surface émettrice de lumière de la feuille luminescente 2, cela par une méthode classique de coulage à la seringue, manuellement ou automatiquement (par exemple au moyen d'un système injecteur mécanique numérique programmable en X, Y). La quantité de résine utilisée et la ou les zones de dépose sont adaptées en fonction de la forme et des dimensions de l'applique.

Les proportions des deux composants de la résine sont avantageusement choisies encore selon les caractéristiques structurelles recherchées du produit fini, en particulier pour :
- obtenir une certaine souplesse de la couche de résine 3, tout en offrant une barrière de protection efficace pour la feuille électroluminescente 2 associée,
- provoquer un effet lumineux de type « diffraction » ou « réverbération » au sein de la couche superficielle 3, pour la lumière émise par la feuille électroluminescente 2.

On notera aussi que la couche superficielle 3 peut être agrémentée d'éléments complémentaires, comme par exemple un colorant ou encore des microparticules métalliques entraînant des effets « paillettes ».

La couche adhésive inférieure 4 consiste quant à elle en une pellicule adhésive ou en une mousse adhésive. Elle permet une fixation simple et rapide de l'applique 1 sur la surface à orner.

En pratique, l'applique lumineuse 1 peut être obtenue de la manière suivante :
- on découpe la feuille électroluminescente 2 selon le contour lumineux souhaité,
- on recouvre la surface lumineuse de la feuille électroluminescente 2 par la couche superficielle de résine 3, cette dernière étant appliquée par une méthode de coulage classique permettant - l'obtention de l'estompement de sa bordure périphérique 8b et aussi - la correspondance entre le pourtour de la feuille électroluminescente 2 et la bordure périphérique 8b de la couche de résine 3 (la feuille 2 formant un support d'accroche),
- on fixe la couche adhésive 4 sur l'autre surface de la feuille électroluminescente 2, et
- on raccorde la feuille électroluminescente 2 avec la connectique électrique 5.

La lampe luminescente 1 obtenue est destinée à être fixée sur la surface à décorer au moyen de sa couche adhésive 4. Elle est disposée de sorte que sa connectique électrique 5 s'étende au travers d'un évidement ou orifice préalablement ménagé au travers de la surface réceptrice à orner. La connectique 5, disposée au dos de la feuille électroluminescente 2 et dans l'encombrement de cette dernière, est entourée par la substance adhésive 4 qui assure son étanchéité par rapport à la partie de la surface réceptrice non recouverte par l'applique.
Une fois convenablement fixée, l'applique 1 est raccordée à l'alimentation électrique 6, et elle s'éclaire selon un éventuel cycle déterminé par les moyens programmables 7 précités.

Les caractéristiques de souplesse et de déformation de l'applique lumineuse 1 lui permettent d'épouser aussi bien une surface plane de type mur où elle constitue alors une applique murale, qu'une surface courbe de type carrosserie d'un véhicule (voiture ou moto) pour constituer en particulier un accessoire de personnalisation (« tuning »). Cette lampe 1 peut encore être rapportée sur une surface de réception souple (de type vêtement, siège automobile, etc.), dans une fonction signalétique ou esthétique.
Bien entendu, les applications précitées de la présente invention ne sont données qu'à titre d'illustrations, et ne sont pas limitatives.

En fonctionnement, cette applique a l'intérêt d'émettre de la lumière de manière multidirectionnelle et avec des effets de « relief lumineux » au niveau de sa couche superficielle 3, ces phénomènes étant originaux au regard des lampes luminescentes actuelles. Un effet lumineux intéressant de type « loupe » ou « lentille » est également visible au niveau de la bordure périphérique 8b de cette couche superficielle de résine 3.
De plus, cette applique lumineuse 1 est particulièrement mince (de l'ordre de quelques millimètres d'épaisseur, et généralement comprise entre 1 et 10 mm), ce qui permet d'obtenir un effet de relief sur la surface à orner sans dénaturer son esthétisme.

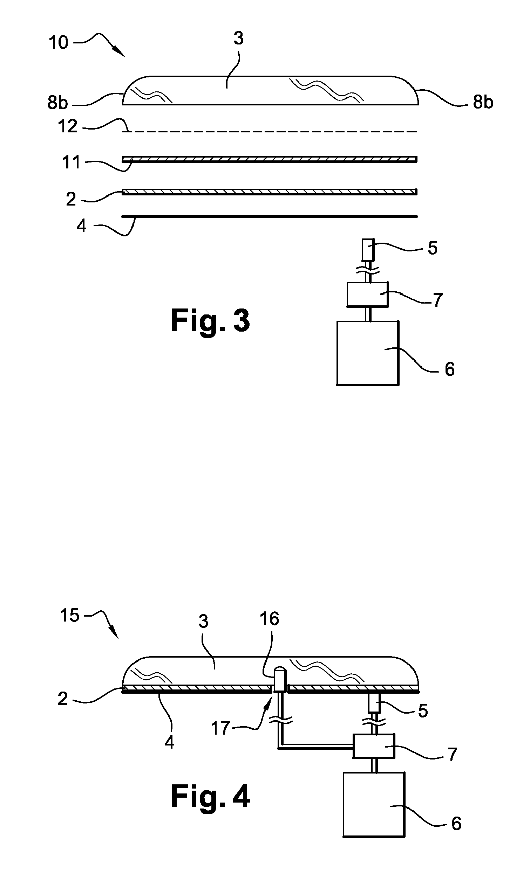

Une variante de réalisation de l'invention est représentée schématiquement et de manière éclatée sur la figure 3.

Cette applique lumineuse 10 se distingue de celle décrite précédemment par la présence de couches complémentaires, intercalées entre la feuille luminescente 2 et la couche de résine 3, en l'occurrence d'une part, une couche 11 formée par un film imprimé, et d'autre part, une autre couche 12 formant un support d'accrochage (ces différentes couches complémentaires 11 et 12 sont solidarisées entre elles, et avec la feuille luminescente 2, au moyen d'une substance adhésive appropriée).

Le film imprimé 11 consiste par exemple en un film plastique transparent réalisé en matériau de type polyester, le ou les dessins à éclairer étant imprimés sur l'une au moins de ses surfaces.
L'impression du ou des dessins sur le film plastique transparent 11 est réalisée selon une méthode classique.
On note que, de manière alternative et classique en soi, ce film imprimé 11 peut être implanté directement au sein de la feuille électroluminescente 2, cela au cours du processus de fabrication de cette dernière.

La couche d'accroche 12 consiste quant à elle par exemple en une pellicule de vernis d'accroche ou en un film d'accroche. Elle a pour fonction de délimiter le pourtour de la couche de résine 3.

La feuille électroluminescente 2 et la couche d'accroche 12 sont ici avantageusement délimitées de sorte que leur bordure périphérique corresponde, au moins sensiblement, au contour du film imprimé 11. Du fait de la forme de cette couche d'accroche 12, la bordure 8b de la couche superficielle de résine coulée 3 épouse également le contour du film transparent 11.
Le dessin est ainsi intégralement rétro-éclairé par la feuille électroluminescente 2 alimentée en électricité, avec un effet lumineux en « relief » sur toute sa surface (produit par la couche superficielle 3 associée).

Selon d'autres formes de réalisation alternatives non représentées et non limitatives, le film imprimé 11 peut être associé :
- à plusieurs feuilles électroluminescentes 2 juxtaposées, pour assurer un éclairage sélectif de certaines parties de son imprimé, et/ou
- à des points ou des surfaces de résine 3 indépendantes et juxtaposées, obtenus par des couches d'accroche 12 adaptées, pour mettre en relief certaines portions seulement du dessin.

Encore de manière alternative, le film imprimé 11 peut être supprimé dans la structure de l'applique 10, le support d'accroche 12 recevant directement l'impression voulue. De même, le support d'accroche 12 peut être supprimé, la couche de résine 3 étant appliquée directement sur le film imprimé 11 (ce dernier constituant alors le support d'accroche).

Egalement de manière intéressante, avec ou sans film imprimé 11, le support d'accroche 12, rapporté au-dessus ou au-dessous de la feuille luminescente 2, peut avoir une surface supérieure à celle de ladite feuille électroluminescente 2 associée, de sorte que son pourtour se situe à l'extérieur par rapport à la bordure de cette feuille électroluminescente 2.
La couche de résine 3, coulée sur ce support d'accroche 12, s'étend alors aussi au-delà de la surface de la feuille électroluminescente 2 ; on obtient alors une applique dont la bordure périphérique 8b est particulièrement lumineuse, lors de l'émission de lumière par la feuille électroluminescente 2. Dans ce cas, le contour de la résine peut suivre le contour de l'impression associée, ceci avec un léger débordement extérieur (par exemple de quelques centimètres), pour obtenir un effet esthétique intéressant. La bande du support d'accroche 12 en débordement extérieur par rapport à la feuille électroluminescente 2, a également l'intérêt de former un pourtour d'étanchéité lorsque l'applique est fixée sur son support de réception.

La figure 4 montre encore une autre variante de réalisation d'applique conforme à l'invention.

Cette applique lumineuse 15 se distingue de celle décrite précédemment en relation avec les figures 1 et 2, en ce qu'elle comporte un éclairage supplémentaire au sein de sa couche de résine 3, sous la forme d'une diode électroluminescente 16 (dénommée encore « LED » ou « DEL ») insérée au travers d'une ouverture 17 ménagée dans la feuille électroluminescente 2 (et le cas échéant dans les couches supplémentaires éventuellement présentes, notamment un film imprimé 11, un support d'accroche 12, etc.).
La LED 16 en question est par exemple du type composant de surface (« CMS »).
Elle est raccordée au circuit d'alimentation électrique 6 de la feuille électroluminescente 2, avantageusement via le moyen de contrôle 7.

La combinaison de cette LED 16 et de la feuille électroluminescente 2, fonctionnant éventuellement selon des cycles différents d'éclairage, permet de multiplier encore les effets lumineux pouvant être obtenus.

De manière générale et alternative, la feuille électroluminescente 2 des appliques selon l'invention peut aussi consister en une feuille micro-perforée, comportant une surface arrière opaque (opposée à la surface lumineuse recouverte de la couche de résine) et munie d'une multitude de petits orifices régulièrement répartis.
De telles appliques présentent alors l'intérêt de pouvoir être rapportées sur des vitres de véhicules ou de magasins (la surface lumineuse étant orientée vers l'extérieur), de sorte à permettre une vision vers l'extérieur des personnes situées à l'intérieur, tout en attirant l'attention des passants circulant à l'extérieur.

## Revendications

1. Applique lumineuse de faible épaisseur, destinée à être apposée sur une surface à décorer, par exemple un mur ou la carrosserie d'un véhicule, **caractérisée en ce qu'**elle comprend au moins une feuille plane souple luminescente (2) sur la ou l'une des surfaces émettrices de lumière de laquelle est solidarisée une résine synthétique (3) souple, transparente ou translucide, formant une couche superficielle de diffusion de la lumière, dont la bordure périphérique (8b) a une section s'estompant en forme générale d'arc de cercle.

2. Applique lumineuse selon la revendication 1, **caractérisée en ce que** la feuille luminescente (2) est de type feuille électroluminescente, et comporte des moyens (5) pour son raccordement à un circuit d'alimentation électrique (6).

3. Applique lumineuse selon la revendication 2, **caractérisée en ce que** les moyens de raccordement électrique (5) s'étendent du côté de la surface de la feuille électroluminescente (2) qui est opposée à celle recouverte par la résine synthétique (3).

4. Applique lumineuse selon l'une quelconque des revendications 2 ou 3, **caractérisée en ce que** le circuit d'alimentation électrique (6) comporte des moyens de commande (7) destinés à permettre la mise en oeuvre de cycles d'éclairage par ladite applique lumineuse (1, 10, 15).

5. Applique lumineuse selon l'une quelconque des revendications 1 à 4, **caractérisée en ce qu'**elle comporte une impression, éventuellement appliquée sur un film (11) disposé - entre la feuille luminescente (2) et la couche superficielle de résine (3) et/ou - au sein de ladite feuille luminescente (2).

6. Applique lumineuse selon l'une quelconque des revendications 1 à 5, **caractérisée en ce qu'**elle comporte au moins une couche d'un matériau formant support d'accrochage (12), ledit support d'accrochage (12) délimitant le pourtour (8b) de ladite couche de résine (3) lorsqu'elle est rapportée par coulage.

7. Applique lumineuse selon la revendication 6, **caractérisée en ce que** le support d'accrochage (12) a une surface différente de celle de la feuille luminescente (2) associée, de sorte que la couche de résine (3) rapportée présente un contour différent de celui de ladite feuille luminescente (2).

8. Applique lumineuse selon la revendication 7, **caractérisée en ce que** le support d'accroche (12) a une surface supérieure à celle de la feuille luminescente (2) associée, de sorte que son pourtour se situe à l'extérieur par rapport à la bordure de ladite feuille luminescente (2), le contour de la couche de résine (3) s'étendant alors aussi au-delà de la surface de la feuille luminescente (2).

9. Applique lumineuse selon l'une quelconque des revendications 1 à 8, **caractérisée en ce que** la couche superficielle de résine (3) a une épaisseur comprise entre 1 et 10 mm.

10. Applique lumineuse selon l'une quelconque des revendications 1 à 9, **caractérisée en ce que** sa surface opposée à la couche de résine (3), est recouverte de moyens (4) permettant sa fixation sur la surface à décorer.

11. Applique lumineuse selon l'une quelconque des revendications 1 à 10, **caractérisée en ce que** la feuille luminescente (2) comporte au moins une découpe ou un ajourage (17), pour permettre le passage d'au moins une ampoule (16) de type diode électroluminescente au travers de ladite feuille luminescente (2).

12. Procédé pour la fabrication d'une applique lumineuse (1, 10, 15) selon l'une quelconque des revendications 1 à 11, **caractérisé en ce qu'**il comprend la succession d'étapes suivantes :
- la découpe de la feuille luminescente (2), selon le contour lumineux recherché,
- éventuellement la pose d'un film imprimé (11, 12) et/ou d'une couche formant support d'accrochage (12) sur la ou l'une des surfaces émettrices de lumière de ladite feuille luminescente (2),
- le recouvrement de ladite surface émettrice de lumière de ladite feuille luminescente (2) par coulage de la couche superficielle de résine (3), cette dernière étant appliquée en quantité appropriée et de manière adaptée de sorte que, une fois rigidifiée, elle présente un relief dont la bordure périphérique (8b) présente une section s'estompant en forme générale d'arc de cercle.
